# NEW EUROPEAN PATENT SPECIFICATION

(11) **EP 0 111 867 B2**
(45) Date of publication and mention of the opposition decision: **11.10.1995**
(45) Mention of the grant of the patent: 01.06.1988
(21) Application number: 83112484.7
(22) Date of filing: 12.12.1983
(51) Int. Cl.: A47J 36/02, H05B 6/12

(54) **Cooking vessel of stainless steel for all types of heat sources**
Kochgerät aus Edelstahl verwendbar auf allen Heizquellen
Récipient de cuisson en acier inoxydable utilisable avec toutes les sources de chauffage

(30) Priority: 14.12.1982 NO 824193
(43) Date of publication of application: 27.06.1984
(73) Proprietor: Hackman Housewares Oy Ab, SF-00511 Helsingfors (FI)
(72) Inventor: Eide, Svein, N-4300 Sandved (NO)
(74) Representative: Patentanwälte Zellentin & Partner

(56) References cited:
- DE-A- 1 948 150
- DE-A- 2 948 626
- FR-A- 2 453 627
- GB-A- 2 014 037
- US-A- 3 684 853
- US-A- 3 966 426

## Description

The present invention relates to cooking vessels of the kind referred to in the pre-characterizing part of claim 1 and claim 4.

The use of stainless steel for making cookware has been known for many years, this metal being in many ways suitable for preparing food even though its cooking properties are not entirely good on account of its poor thermal conductivity. The various types of stainless steel have properties which, without modification, make them unsuitable for cookware which is to be used also for induction heating. Various embodiments have been tried to overcome these difficulties.

Austenitic stainless steel has very low magnetic permeability, and is thus not a suitable material for cookware for heating by all types of heat sources. Very good cooking properties have however been imparted to such cookware by strengthening the base with a plate of a metal with good thermal conductivity, for example aluminium or copper thus making the cookware suitable for heating on an ordinary hotplate or by gas.

The bond between austenitic stainless steel and aluminium or copper has proved to be very strong, so the extra base does not fall off, not even after prolonged use. However, attempts to heat up such a vessel on an induction plate are not successful because the metals in the vessel cannot, in practice, be magnetized.

Chromium steel, with its good magnetic permeability, has also been tried as a material for cookware. As with cookware of austenitic steel, it has been desirable to improve the cooking properties by brazing a copper plate onto the base, and a protective plate of chromium steel outside the copper plate. A saucepan of this type is efficiently heated by an induction plate, but the base is not durable. The combination of chromium steel and copper suffers from too large a difference in the coefficients of thermal expansion so that the base becomes loose after only a short period of use.

Also martensitic stainless steel has very good magnetic permeability. GB-A-1,389,573 proposes cookware of copper or aluminium cladded on the outside and inside with this stainless steel. However, the combination of martensitic stainless steel and copper suffers from the same large difference in the coefficients of thermal expansion as chromium steel-copper, and this combination does not last. An even larger difference is shown in the combination of chromium steel and aluminium and this in consequence is also non-durable.

It has thus proved in practice that the two above-mentioned types of stainless steel which have good magnetic permeability cannot, with conventional technology, be affixed firmly enough to aluminum or copper to be able to withstand the type of heating which is produced by high frequency electrical induction heating. The question of extending the range of use of stainless steel saucepans to include heating on induction plates has thus not been satisfactorily solved.

From DE-A-19 48 150 there is known a composition of metal layers for cooking vessels (containers) of stainless steel, a plate of aluminium which is wholly coated by phosphorous nickel and of a plate of stainless steel. Between the layers of stainless steel and the coated aluminium there are situated layers of hard solder. During the process to produce this composition the aluminium is melted by high frequency of about 60.000 cycles, the melted aluminium reacting with the phosphorous nickel and forming a very brittle alloy of these metals. A cooking vessel of such a composition is not suitable for conductive heating for household purposes where a frequency of 20 to 40 kHz is used. The process of producing such compositions is expensive and needs special precautions for emergency cases with the molten aluminium.

Furthermore, FR-A-2 453 627 discloses a cooking vessel as defined in the pre-characterizing part of claim 1, in which the magnetizable plate may consist of nickel or a nickel based alloy. to prevent the cooking vessel from being excessively heated. This is due to the fact that nickel has a Curie point at 350°C. The magnetic properties for nickel are however poor, less than 50% compared with mild steel. Thus, nickel has low efficiency when used in connection with induction heating. Besides nickel is very expensive and a relatively hard metal. It is further proposed to use a magnetizable plate made of chromium steel. Chromium steel is, due to the surface oxide layer, difficult to hard solder, which results in a poor bonding between the aluminum base and the magnetizable plate. Further the combination of chromium steel and aluminium suffers from too large difference in the coefficient of thermal expansion, which would cause a bimetallic effect when the cooking vessel is heated. The bimetallic effect results in a bending of the bottom of the cooking vessel and creates large shearing forces between the aluminum base and the chromium bottom plate. Due to the' poor bonding between the aluminium base and the chromium plate, together with the large shearing forces, the chromium plate becomes loose after only a short period of use.

On the other hand, US-A-3 966 426 discloses a cooking vessel for use with induction heating cooking units, as defined in the pre-characterizing part of claim 14, in which the laminated wall of the vessel comprises a core of an aluminium base alloy having a relatively high thermal conductivity and a layer of low carbon steel confining the magnetic field, the surfaces of which are covered with stainless steel. However, such a laminate can only be produced by bonding technology which requires high costs.

It is an object of this invention to furnish cookware with good boiling, frying and baking properties and which can be used on all heat sources of interest, including induction plates, this cooking vessel having a long period of use.

According to the present invention this object is solved by a cooking vessel of the kind referred to in claim 1 and 4.

Preferred embodiments of the invention are described in subclaims 2, 3 and 5.

According to claim 1, the vessel of austenitic stainless steel comprises an extra base of a metal with good heat conductivity, for example copper or aluminium. Outside this extra base there is affixed a magnetizable plate of mild steel. A feature of the invention is that there are two or three intermediate layers between the layer of magnetizable steel and the heat-distributing layer of copper or aluminium.

These intermediate layers are comparatively thin, and they must be chosen that their coefficients of expansion lie between the coefficients of expansion of the heat-distributing layer and the magnetizable layer. The shearing forces which arise between the two main layers during heating and which tend to cause the laminate to disintegrate, are, through the structure according to the invention, spread over two or three intermediate layers. These function as bonding layers and compensating layers for linear expansion. An intermediate layer can, by way of example, consist of a thin layer of nickel, copper, brass or austenitic stainless steel, which has been coated on one or both sides with an expediently composed brazing alloy. The most expedient way of building up the magnetizable plate is in the form of a roll-plated laminate with a core of mild steel. If the heat-distributing layer is of aluminium, and if it is bonded to the magnetizable plate by means of a brazing process, it is important that the brazing alloy is of such composition that it also serves as a diffusion barrier between aluminium and austenitic stainless steel so as to avoid the formation of a brittle ferro-aluminium phase.

It is a feature of the invention that the magnetizable steel plate consists of a non-perforated unbroken surface from the periphery and in towards the center, thus avoiding ring-shaped subdivisions.

It is known that rapid solidified amorphous steel, so-called metallic glass, is better than ordinary mild steel for transformer cores, because it gives lower losses. It is a feature of this invention that the sheet which constitutes the magnetizable and heat-producing layer in a cooking vessel according to the invention, can consist wholly or partly of amorphous rapid solidified steel. A further feature is that this layer can be protected on the outside, preferably by the same metal and of the same thickness as in the intermediate layer on the inside.

Hotplates of ceramic glass are sensitive to surface scratches. Scratches from sharp edges can be the cause of cracks under the action of heat. A feature of this invention is that the magnetizable plate with intermediate layers and coating is rounded and, in the event, drawn back from the outer edge so that the exposed outer periphery is rounded, or that it consists of a sort metal such as copper or aluminum. This also protects the edge of the steel against corrosion.

A further effect of having two or three intermediate layers as prescribed is that heat-spreading is increased. Intercrystalline layers in the brazing zones will act as temperature barriers, delay the conduction of heat across the base and increase the conduction of heat in the radial direction.

In the following the invention is described in more detail with reference to the drawings in which:
Fig. 1 illustrates a section of part of the base of a cooking vessel of stainless steel with a heat-distributing layer of copper and with the peripheral part of the magnetizable plate embedded in a groove in the copper plate:
Fig. 2 shows a section of a part of the base of a cooking vessel of stainless steel in which the heat-distributing layer of aluminium is completely covered by a magnetizable laminated plate;
Fig. 3 shows a section of the base with the laminated plate continuing up along the side of the vessel;
Fig. 4 shows an example with three intermediate layers.

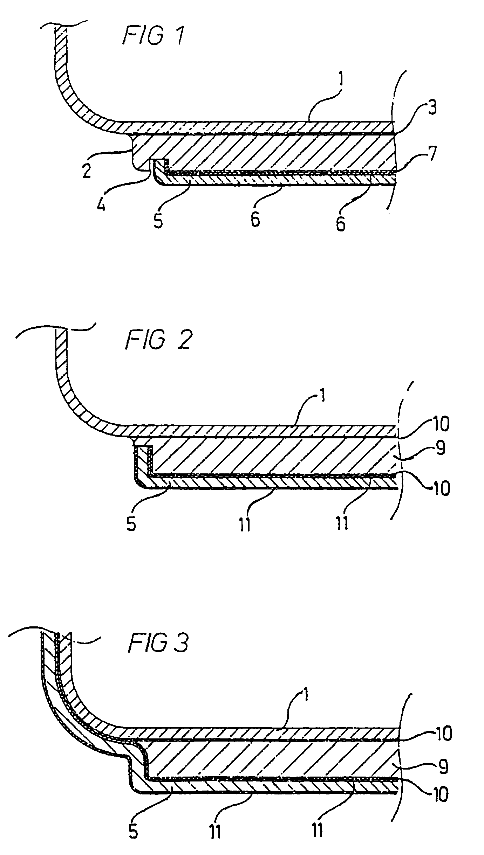

Fig. 1 illustrates a container of austenitic stainless steel (1) with a heat-distributing layer (2) of copper bonded to the container by a layer of hard solder (3). In the peripheral area of the copper plate (2) there is a groove (4). The magnetizable plate (5) onto both sides of which there has been roll-plated a thin layer of nickel (6) is cylindrical in its outer edge and pressed down into the groove (4). The plate (5) with its coating layers (6) is bonded to the copper plate (2) by means of a suitable hard solder (7).

In Fig. 2 we see the container of austenitic stainless steel (1). The heat-distributing layer (9) of aluminium is completely covered by a laminated plate of mild steel (5) which on both sides is plated with austenitic stainless steel (1), and bonded to the aluminum plate by means of a soldering alloy (10).

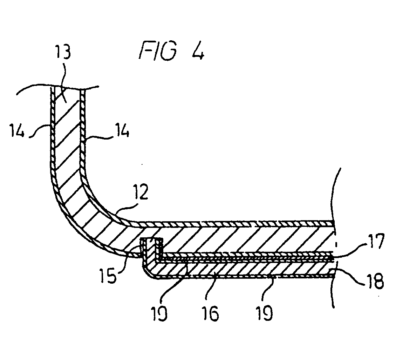

In Fig. 3 we see how the laminate consisting of the magnetizable mild steel (5), plated with austenitic stainless steel on each side (11) continues up along the container of austenitic stainless steel (1).

Comparative trials have been conducted with cooking vessels made according to the method described here and two purchased vessels A and B.

The vessels were heated up for 1 min. on an induction plate and then cooled in air for 5 min.

Vessel A withstood 45 cycles, vessel B 630 cycles, whilst vessels made according to the invention remained intact after 10.000 cycles.

Fig. 4 illustrates a section of a saucepan body (12) of a laminate built up of a core (13) covered with thin layers of stainless steel (14). Preferably the material of the core (13) consists of aluminum. In the outside of the base there are grooves (15), and an extra base (16) is fixed to the body (12) by means of solder (17). The extra base (16) is built up of a core (18) of mild steel covered on both sides with thin layers of austenitic stainless steel (19).

## Claims

1. Cooking vessel comprising
- a container (1) made of austenitic stainless steel,
- an extra base (2, 9) of metal with good thermal conductivity
- a magnetizable plate (5) provided on the outer face of the extra base and
- an intermediate layer (7, 10) disposed between the magnetizable plate and the extra base (2, 9), characterized in
- that an additional intermediate layer (6, 11) is provided between the magnetizable plate (5) and the extra base (2, 9),
- that the magnetizable plate (5) is of mild steel or
wholly or partly of amorphous metallic glass and is protected by a layer of nickel, copper, brass or stainless steel (6, 11), and
- that the coefficients of expansion of the intermediate layers (6, 7; 10, 11) lie between the corresponding coefficients of the extra base (2, 9) and the magnetizable plate (5).

2. Cooking vessel according to claim 1, characterized in that the magnetizable plate (5) has, at least in part, unbroken connection from the periphery to the center so that ring-shaped division is avoided.

3. Cooking vessel according to claims 1 and 2 characterized in that the magnetizable plate (5) continues up along and covers the outside of the vessel.

4. Cooking vessel comprising
- a three-layered laminate (12) consisting of a core (13) covered on each face with a layer (14) of stainless steel and
- an extra base (16) of metal with good thermal conductivity, which is magnetizable and bonded to the laminate (12), characterized in that
- a first intermediate layer (17) and a second intermediate layer (19) are provided between the laminate (12) and the extra base (16) and
- the coefficients of expansion of the intermediate layers (17, 19) and the layer (14) covering the core (13) lie between the corresponding coefficients of the core (13) and the extra base (16) and in that the second intermediate layer (19) consists of austenitic stainless steel covering the extra base (16) made of mild steel.

5. Cooking vessel according to claim 4, characterized in that the core (13) consists of aluminium.

## Patentansprüche

1. Kochgerät, bestehend aus
- einem Behälter (1) aus austenitischem Edelstahl,
- einer zusätzlichen Grundschicht (2, 9) aus Metall mit guter thermischer Leitfähigkeit,
- einer magnetisierbaren Platte (5), die auf der Außenfläche der zusätzlichen Grundschicht (2, 9) angeordnet ist,
- einer Zwischenschicht (7, 10), die zwischen der magnetisierbaren Platte und der zusätzlichen Grundschicht (2, 9) angeordnet ist,
dadurch gekennzeichnet,
- daß eine weitere Zwischenschicht (6, 11) zwischen der magnetisierbaren Platte (5) und der zusätzlichen Grundschicht (2, 9) vorgesehen ist,
- daß die magnetisierbare Platte (5) aus Flußstahl oder ganz oder teilweise aus amorphem metallischem Glas besteht und durch eine Schicht aus Nickel, Kupfer, Messing oder Edelstahl (6, 11) geschützt ist, und
- daß die Ausdehnungskoeffizienten der Zwischenschichten (6, 7; 10, 11) zwischen den entsprechenden Koeffizienten der zusätzlichen Grundschicht (2, 9) und der magnetisierbaren Platte (5) liegen.

2. Kochgerät nach Anspruch 1, dadurch gekennzeichnet, daß die magnetisierbare Platte (5), zumindest teilweise, eine ununterbrochene Verbindung von der Peripherie zur Mitte aufweist, so daß eine ringförmige Teilung vermieden wird.

3. Kochgerät nach Anspruch 1 und 2, dadurch gekennzeichnet, daß die magnetisierbare Platte (5) sich weiter nach oben fortsetzt und die Außenseite des Gerätes bedeckt.

4. Kochgerät, bestehend aus
- einem dreischichtigen Laminat (12) aus einem Kern (13), der auf beiden Seiten mit einer Schicht (14) aus Edelstahl bedeckt ist, und
- einer zusätzlichen Grundschicht (16) aus Metall mit einer guten thermischen Leitfähigkeit, die magnetisierbar ist und mit dem Laminat (12) verbunden ist,
dadurch gekennzeichnet, daß
- eine erste Zwischenschicht (17) und eine zweite Zwischenschicht (19) zwischen dem Laminat (12) und der zusätzlichen Grundschicht (16) vorgesehen ist, und
- die Ausdehnungskoeffizienten der Zwischenschichten (17, 19) und der den Kern (13) bedeckenden Schicht (14) zwischen den entsprechenden Koeffizienten des Kerns (13) und der zusätzlichen Grundschicht (16) liegen, und
- daß die zweite Zwischenschicht (19) aus austenitischem Edelstahl besteht, die die zusätzliche Grundschicht (16) aus Flußstahl bedeckt.

5. Kochgerät nach Anspruch 4, dadurch gekennzeichnet, daß der Kern (13) aus Aluminium besteht.

## Revendications

1. Récipient de cuisson comprenant
- un récipient (1) en acier inoxydable austénitique,
- une base (2, 9) supplémentaire en un métal ayant une bonne conductivité thermique,
- une plaque (5) aimantable fixée a la face externe de la base supplémentaire, et
- une couche (7, 10) intermédiaire disposée entre la plaque aimantable de la base (2, 9) supplémentaire,
récipient caractérisé
- en ce qu'une couche (6, 11) intermédiaire supplémentaire est prévue entre la plaque (5) aimantable et la base (2, 9) supplémentaire,
- en ce que la plaque (5) aimantable consiste en acier doux ou, entièrement ou en partie, en un verre métallique amorphe (métal vitreux amorphe) et est protégée par une couche de nickel, de cuivre, de laiton ou d'acier inoxydable (6, 11), et
- en ce que les coefficients de dilatation des couches intermédiaires (6, 7; 10, 11) se situent entre les coefficients correspondants de la base (2, 9) supplémentaire et de la plaque (5) aimantable.

2. Récipient de cuisson selon la revendication 1, caractérisé en ce que la plaque (5) aimantable comporte, au moins en partie, une connexion non brisée de la périphérie vers le centre, ce qui évite de la division en forme d'anneaux.

3. Récipient de cuisson selon la revendication 1 et 2, caractérisé en ce que la plaque (5) aimantable continue le long de l'extérieur du récipient qu'elle recouvre.

4. Récipient de cuisson comprenant
- un stratifié (12) formé de trois couches consistant en une partie centrale (13) dont chaque face est revêtue d'une couche (14) en acier inoxydable, et
- une base (16) supplémentaire en un métal ayant une bonne conductivité thermique, qui est aimantable et est fixé au stratifié (12),
récipient caractérisé
- en ce qu'il comporte une premiere couche (17) intermédiaire et une seconde couche (19) intermédiaire entre le stratifié (12) et la base (16) supplémentaire, et
- en ce que les coefficients de dilatation des couches intermédiaires (17, 19) et de la couche (14) recouvrant la partie centrale (13) se situent entre les coefficients correspondants de la partie centrale (13) de la base (16) supplémentaire, et
- en ce que la seconde couche (19) intermédiaire consiste en de l'acier inoxydable austénitique recouvrant la base (16) supplémentaire en acier doux.

5. Récipient de cuisson selon la revendication 4, caractérisé en ce que la partie centrale (13) consiste en de l'aluminium.
